# EUROPÄISCHE PATENTSCHRIFT

(11) **EP 3 339 172 B1**
(45) Veröffentlichungstag und Bekanntmachung des Hinweises auf die Patenterteilung: **07.12.2022**
(21) Anmeldenummer: 16205931.5
(22) Anmeldetag: 21.12.2016
(51) Int. Cl.: B64D 11/00, B61D 37/00, B60R 5/00, E05B 83/28, E05B 77/54, E05B 47/02

(54) **GEPÄCKABLAGESYSTEM, LUFTFAHRZEUG UND VERFAHREN ZU DESSEN BETRIEB**
LUGGAGE STORAGE SYSTEM, AIRCRAFT AND METHOD FOR ITS OPERATION
SYSTÈME DE COFFRE À BAGAGES, AÉRONEF ET SON PROCÉDÉ DE FONCTIONNEMENT

(43) Veröffentlichungstag der Anmeldung: 27.06.2018
(73) Patentinhaber: Airbus Defence and Space GmbH, 82024 Taufkirchen (DE)
(72) Erfinder: BAUER, Dominik, 82110 Germering (DE)
(74) Vertreter: Isarpatent

(56) Entgegenhaltungen:
- WO-A1-2014/127161
- DE-A1-102012 005 917
- DE-A1-102014 114 915
- US-A1- 2008 078 871
- US-A1- 2013 233 971
- US-A1- 2015 307 192

## Beschreibung

Die vorliegende Erfindung betrifft ein Gepäckablagesystem, ein Luftfahrzeug und ein Verfahren zum Betreiben eines Gepäckablagesystems.

Typischerweise lassen sich Gepäckablagen, insbesondere in einer Passagierkabine von Luftfahrzeugen, unabhängig von einer aktuellen Flugsituation, insbesondere während einer Notevakuierung, durch Passagiere in der Passagierkabine öffnen.

Die US 4,275,942 A beschreibt eine als Schale gestaltete Gepäckablage, die aus einer geschlossenen Staustellung bzw. Ruheposition in eine offene Beladeposition ausschwenkbar ist. Die Zugangsöffnung für die Passagiere ergibt sich dabei aus einer Höhendifferenz zwischen einer unteren Gehäusekante und der Vorderkante der Gepäckablage in der abgesenkten Position.

Die WO 2007/048916 A beschreibt eine Überkopf-Gepäckablage für Flugzeuge, die zur Gepäckaufnahme ein weitestgehend rechteckförmiges Gehäuse einschließt. Das in einer Transportstellung schräg geneigt angeordnete, zu den Passagiersitzreihen zeigend ein konvex gestaltetes Kabinenwandelement einschließende Gehäuse ist um einen außermittigen Drehpunkt in eine Belade- bzw. Entladeposition schwenkbar.

Ferner beschreibt die WO 2008/012427 A eine Überkopf-Gepäckablage für Flugzeuge. Die Überkopf-Gepäckablage ist in der Transportstellung schräg geneigt angeordnet und an der Unterseite einstückig mit einem Kabinenwandelement versehen. In der Belade- bzw. Entladeposition wird die Gepäckablage in Richtung des Passagiers um einen außermittig positionierten Drehpunkt geschwenkt.

Die WO 2014/127161 A1 beschreibt eine schwenkbare Behälteranordnung, die so konfiguriert ist, dass sie Gepäck aufnimmt und im Inneren eines Flugzeugs positioniert werden kann. Die schwenkbare Behälteranordnung umfasst ein oberes Gehäuse, das eine Verstärkung und eine erste und eine zweite Seitenwand umfasst, einen Behälter, der mit dem oberen Gehäuse zusammenwirkt, um einen Behälterinnenraum zu definieren, einen ersten Schwenkmechanismus, der operativ mit der ersten Seitenwand und dem Behälter verbunden ist, und einen zweiten Schwenkmechanismus, der operativ mit der zweiten Seitenwand und dem Behälter verbunden ist.

Die DE 10 2012 005917 A1 beschreibt ein Gepäckablagefach mit einem Gehäuse und mit einem Gehäusebehälter, mit einer Antriebseinrichtung zum Bewegen des Gehäusebehälters zwischen einer Öffnungsstellung und einer Schließstellung, mit einer Verschlussvorrichtung zur Verriegelung und Entriegelung des Gehäusebehälters in der Schließstellung, und mit einer Steuereinrichtung zur Steuerung der Antriebseinrichtung.

Die DE 10 2014 114915 A1 beschreibt ein Überkopf-Gepäckablagefach für eine Kabine eines Luftfahrzeuges, welches eine Verriegelungseinrichtung aufweist. Das Überkopf-Gepäckablagefach ist von einem geschlossenen Zustand in einen geöffneten Zustand überführbar und mittels eines Formgedächtnisaktuators der Verriegelungseinrichtung im geschlossenen Zustand verriegelbar.

Die US 2015/307192 A1 beschreibt einen Flugzeug-Aufbewahrungsbehälter, der ein oberes Gehäuse und einen schwenkbar mit dem oberen Gehäuse verbundenen Behälter umfasst, der mit dem oberen Gehäuse zusammenwirkt, um einen Behälterinnenraum zu definieren. Der Behälter umfasst einen Boden, eine Vorderkante und eine erste und eine zweite gegenüberliegende Seitenwand, die sich von dem Boden nach oben erstrecken, und schwenkt um eine Schwenkachse in Bezug auf das obere Gehäuse zwischen einer offenen Position und einer geschlossenen Position.

Es ist Aufgabe der vorliegenden Erfindung ein weiterentwickeltes Gepäckablagesystem bereitzustellen, das effizient steuerbar, beispielsweise zentral und/oder automatisch steuerbar, ist.

Diese Aufgabe wird jeweils durch ein Gepäckablagesystem mit den Merkmalen des Anspruchs 1, ein Luftfahrzeug nach Anspruch 8 sowie durch ein Verfahren mit den Merkmalen des Anspruchs 9 gelöst.

Nach einem ersten Aspekt der Erfindung umfasst ein Gepäckablagesystem für ein Luftfahrzeug ein Rastmittel, welches als Bolzen ausgebildet ist und mittels eines elektromechanischen Auslösers zwischen einer Entriegelungsstellung und Verriegelungsstellung ansteuerbar ist. Des Weiteren umfasst das Gepäckablagesystem eine Gepäckablage mit einem Gehäuse und einem Halterahmen, wobei das Gehäuse zumindest teilweise in dem Halterahmen der Gepäckablage verschwenkbar gelagert ist. Der Halterahmen umfasst einen inneren Führungsrahmen und einen äußeren Führungsrahmen und Stirnflächen des Gehäuses sind jeweils zwischen dem inneren Führungsrahmen und dem äußeren Führungsrahmen angeordnet. Das Gehäuse kann insbesondere eine Beladungsöffnung aufweisen. Hierbei weisen das Gehäuse und der Halterahmen jeweils ein Gegenrastmittel auf, welche in dem Gehäuse und dem Halterahmen jeweils als Loch ausgebildet sind, wobei der innere Führungsrahmen und der äußere Führungsrahmen das Gegenrastmittel aufweisen. Die Gegenrastmittel sind bei entsprechender Ansteuerung des Rastmittels für eine Schwenkverriegelung des Gehäuses mit dem Rastmittel in Wirkverbindung und für eine Schwenkentriegelung des Gehäuses mit dem Rastmittel außer Wirkverbindung bringbar. Die Verriegelungsstellung kann beispielsweise auf eine mechanische, beispielswiese ineinandergreifende Zahnräder, und/oder magnetische Wirkverbindung basieren.

Nach einem weiteren Aspekt betrifft die Erfindung ein Luftfahrzeug mit einem hier beschriebenen Gepäckablagesystem.

Schließlich betrifft die Erfindung ein Verfahren zum Betreiben eines Gepäckablagesystems in einem Luftfahrzeug. In einem ersten Schritt des Verfahrens wird ein durch einen elektromechanischen Auslöser zwischen einer Entriegelungsstellung und Verriegelungsstellung steuerbares Rastmittel bereitgestellt, welches als Bolzen ausgebildet ist. In einem nächsten Schritt des Verfahrens wird eine Gepäckablage mit einem Gehäuse und einem Halterahmen bereitgestellt, wobei das Gehäuse zumindest teilweise in dem Halterahmen der Gepäckablage verschwenkbar gelagert wird, der Halterahmen einen inneren Führungsrahmen und einen äußeren Führungsrahmen umfasst, Stirnflächen des Gehäuses jeweils zwischen dem inneren Führungsrahmen und dem äußeren Führungsrahmen angeordnet sind und das Gehäuse und der Halterahmen jeweils ein Gegenrastmittel aufweisen, welche in dem Gehäuse und dem Halterahmen jeweils als Loch ausgebildet sind, wobei der innere Führungsrahmen und der äußere Führungsrahmen das Gegenrastmittel aufweisen. In einem weiteren Schritt des Verfahrens werden die Gegenrastmittel durch entsprechende Ansteuerung des Rastmittels für eine Schwenkverriegelung des Gehäuses mit dem Rastmittel in Wirkverbindung und für eine Schwenkentriegelung des Gehäuses mit dem Rastmittel außer Wirkverbindung gebracht.

Von der vorliegenden Erfindung sind auch Gepäckablagesysteme in anderen Transportmitteln betroffen, wie beispielsweise schienengebundene Fahrzeuge, insbesondere Hochgeschwindigkeitszüge, Autobusse oder Passagierschiffe.

Die Beladungsöffnung des Gehäuses kann zum Aufnehmen von beispielsweise Handgepäck, Handtaschen und/oder Laptoptaschen etc. - im Folgenden Gepäck bezeichnet -, vorgesehen oder geeignet sein. Das somit schwenkbare Gehäuse kann über den Halterahmen an zumindest einer Komponente eines Luftfahrzeugrumpfes befestigt sein. Hierdurch lässt sich weitestgehend eine auf Augenhöhe des Passagiers übereinstimmende Positionierung des Gehäuses einstellen, wodurch eine einfache Ablage und Entnahme des Gepäcks bereitstellbar ist.

Unter dem Begriff "Gehäuse" soll vorliegend ein zumindest teilweise zum Aufnehmen des Gepäcks geeignetes Behältnis verstanden werden. Alternativ kann unter "Gehäuse" ein Stauraum für das Gepäck verstanden werden. Der Halterahmen kann beispielsweise zumindest teilweise fest mit der zumindest einen Komponente des Luftfahrzeugrumpfes in Verbindung stehen, wobei das Gehäuse schwenkbar in dem Halterahmen gelagert oder angeordnet ist.

Das Rastmittel kann insbesondere ausschließlich durch den elektromechanischen Auslöser steuerbar sein. Unter dem elektromechanischen Auslöser kann insbesondere ein elektromechanisches Sensorelement verstanden werden. Der elektromechanische Auslöser kann beispielsweise ein mechanisches Bewegen des Rastmittels verursachen oder beispielsweise ein magnetisches Feld induzieren, das ein Bewegen des Rastmittels in oder an die jeweiligen Gegenrastmittel verursacht oder veranlasst. Das heißt, dass der elektromechanische Auslöser einen Entriegelungs-oder Verriegelungsmechanismus mittels des Rastmittels und den entsprechenden Gegenrastmitteln steuert oder verursacht. Das Rastmittel kann mit dem elektromechanischen Auslöser in direktem Kontakt stehen oder alternativ kann das Rastmittel indirekt, beispielsweise über eine kabellose Verbindung, mit dem elektromechanischen Auslöser in Verbindung stehen.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Schalten zwischen der Entriegelungsstellung und Verriegelungsstellung beispielsweise mittels Eingabe eines Sicherheitscodes, einer Chipkarte oder mittels eines Schlüssels an dem elektromechanischen Auslöser erfolgen. Ferner ist denkbar, dass der elektromechanische Auslöser über ein Cockpit des Luftfahrzeuges zentral gesteuert wird, beispielsweise durch den Piloten oder alternativ durch einen Board-Computer.

Gemäß einer Weiterbildung kann der elektromechanische Auslöser in einer Ausnahmesituation automatisch das Rastmittel zwischen der Entriegelungsstellung und der Verriegelungsstellung schalten. Unter Ausnahmesituation kann insbesondere eine Gefahrensituation während eines Luftfahrbetriebes erfolgen. Unter einer Ausnahmesituation oder Gefahrensituation können beispielsweise starke Turbulenzen, Aufleuchten einer Anschnallpflicht, Aktivieren von Sauerstoffmasken bei Druckabfall, eine Notlandung oder Notevakuierung verstanden werden. Ferner ist denkbar, dass das hier beschriebene Gepäckablagesystem während einer Landephase und einschließlich bis zum Erreichen einer Endposition oder Zielposition aktiviert wird.

Gemäß der Erfindung ist das Rastmittel als Bolzen ausgebildet und die Gegenrastmittel in dem Gehäuse und dem Halterahmen sind jeweils als Loch ausgebildet. Die Löcher können jeweils eine Toleranz von jeweils 1 bis 2 Millimeter hinsichtlich eines Durchmessers des Bolzens aufweisen. Durch die hier angegebene Toleranz lässt sich der Bolzen insbesondere bei starken Turbulenzen sicher in die jeweiligen Löcher des Gehäuses und dem Halterahmen manövrieren, einfügen oder anordnen. Ferner lässt sich durch die Toleranz das Montieren oder das Anbringen des Gehäuses in oder an den Halterahmen kostengünstig durchführen, da beispielsweise passgenaue Ausrichtungen weitestgehend vermieden werden können.

Gemäß der Erfindung umfasst der Halterahmen einen inneren Führungsrahmen und einen äußeren Führungsrahmen und Stirnflächen des Gehäuses sind jeweils zwischen dem inneren Führungsrahmen und dem äußeren Führungsrahmen angeordnet. Das heißt, dass der innere Führungsrahmen und der äußere Führungsrahmen das Gegenrastmittel aufweisen. Beispielsweise verlaufen die Stirnflächen des Gehäuses parallel zueinander und weisen in Längsrichtung des Luftfahrzeuges zueinander einen Abstand, insbesondere einen konstanten Abstand, auf. Die hier beschriebenen Stirnflächen begrenzen insbesondere die Beladungsöffnung in der Längsrichtung des Luftfahrzeuges.

Gemäß einer Weiterbildung kann das durch den elektromechanischen Auslöser steuerbare Rastmittel auch jeweils an zwei gegenüberliegenden Stirnflächen des Gehäuses angeordnet sein. Das Rastmittel kann sich außerhalb oder alternativ innerhalb des Gehäuses befinden.

Aus dem Kontext der Erfindung ergibt sich, dass die jeweiligen Löcher in dem Gehäuse, dem inneren Führungsrahmen und dem äußeren Führungsrahmen - also dem Halterahmen der Gepäckablage - in einem geschlossenen Transportzustand des Gehäuses übereinander angeordnet sind. Mit anderen Worten fluchten die jeweiligen Löcher in eine gemeinsame Öffnung.

Gemäß einer Weiterbildung kann der elektromechanische Auslöser eine Signalleitung umfassen. Die Signalleitung kann insbesondere mit dem Cockpit oder dem Bordcomputer verbunden sein. Ferner ist denkbar, dass der elektromechanische Auslöser mittels der Signalleitung mit weiteren Sensoren des Luftfahrzeuges derart verbunden ist, dass beim Detektieren oder Feststellen der Ausnahme- oder Gefahrensituation mittels der hier beschriebenen weiteren Sensoren der elektromechanische Auslöser automatisch aktivierbar ist.

Gemäß einer Weiterbildung kann der elektromechanische Auslöser eine zusätzliche manuelle Entriegelungsvorrichtung umfassen. Insbesondere kann die zusätzliche manuelle Entriegelungsvorrichtung nicht frei zugänglich sein. Hierdurch kann insbesondere verhindert werden, dass in der hier beschriebenen Ausnahmesituation oder Gefahrensituation Passagiere Zugang zu dem elektromechanischen Auslöser des Gepäckablagesystems erlangen und das Gehäuse, beispielsweise unter Gewalteinfluss, öffnen. Beispielsweise befindet sich die manuelle Entriegelungsvorrichtung des elektromechanischen Auslösers hinter einer Verkleidung einer Passagierkabine. Alternativ kann die zusätzliche manuelle Entriegelungsvorrichtung ein integraler Bestandteil des elektromechanischen Auslösers sein, wobei sich der elektromechanische Auslöser hinter der Verkleidung der Passagierkabine befinden kann.

Gemäß einer Weiterbildung können das Rastmittel und die Gegenrastmittel in einer geschlossenen Transportposition des Gehäuses zumindest bereichsweise in Höhe eines Griffes des Gehäuses angeordnet sein. Der hier beschriebene Griff kann insbesondere einen Schließmechanismus umfassen, wodurch der Passagier oder ein Insasse des Luftfahrzeuges das Gehäuse mit der Beladungsöffnung einfach öffnen oder schließen kann. Mit anderen Worten handelt es sich bei dem hier beschriebenen Griff um eine zusätzliche nicht verriegelbare oder entriegelbare Komponente des Gepäckablagesystems. Insbesondere kann das hier beschriebene Gegenrastmittel, welches in oder an dem Gehäuse und dem Halterahmen der Gepäckablage ausgebildet ist, in dem geschlossenen Transportzustand parallel beabstandet zu dem Griff in Längsrichtung des Gehäuses angeordnet sein.

Gemäß einer Weiterbildung kann das Gehäuse mit der Beladungsöffnung eine Drehachse aufweisen und das Gehäuse kann mittels der Drehachse zwischen einer Beladeposition und der geschlossenen Transportposition des Gehäuses verschwenkbar ausgebildet sein. Das Gehäuse kann beispielsweise mittels der Drehachse in dem Halterahmen der Gepäckablage verschwenkbar montiert sein. Durch die Drehachse kann das Gehäuse in dem Halterahmen in Richtung beispielsweise einer Sitzreihe der Passagierkabine platzsparend aus einer Ausnehmung beispielsweise innerhalb des Luftfahrzeugrumpfes geöffnet und geschlossen werden. Mit anderen Worten ist das Gehäuse mittels der Drehachse verschwenkbar in dem Halterahmen montiert, gelagert oder angeordnet.

Gemäß einer Weiterbildung kann die Drehachse als Längsträger ausgebildet sein und der Längsträger kann ein Rohr aus Metall, Kunststoff oder Verbundwerkstoff umfassen. Alternativ kann der Längsträger eine Kombination dieser Materialien umfassen. Der beispielsweise rohrförmige, jeweils endseitig in dem Halterahmen gelagerte Längsträger bildet beispielsweise eine durchbiegungsresistente, gewichts- und kraftoptimierte Bauweise des schwenkbaren Gehäuses des Gepäckablagesystems.

Gemäß einer Weiterbildung kann das Rastmittel in der geschlossenen Transportposition des Gehäuses zumindest teilweise in das Gehäuse hinein oder herausragen. Je nach Positionierung des Rastmittels kann dieses in das Gehäuse hinein oder herausragen. Das Rastmittel kann sich somit außerhalb oder alternativ innerhalb des Gehäuses befinden.

Zur Realisierung einer Leichtbau-Gepäckablage kann das Gehäuse aus Kunststoff oder Verbundwerkstoff, beispielsweise Sandwich-Wabenplatten, hergestellt sein. Insbesondere kann eine gezielte Versteifung von lastführenden Querflächen in einem Gehäuseboden und/oder den Seitenflächen mittels glasfaserverstärktem Kunststoff oder kohlenstofffaserverstärkter Kunststoff zwischen denen ein Wabenkern eingebracht ist, durchgeführt werden. Beispielsweise kann die Drehachse im Bereich des Gehäusebodens angeordnet sein.

Gemäß einer Weiterbildung kann das Gepäckablagesystem für die Gepäckablage als ein modularer Baustein einer Innenausstattung der Passagierkabine gestaltet sein und typenübergreifend für mehrere Rumpfquerschnittsgrößen von verschiedenen Luftfahrzeugen eingesetzt werden.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: eine perspektivische Ansicht eines Gepäckablagesystems gemäß einer Ausführungsform der vorliegenden Erfindung;
- Fig. 2: eine schematische Detailansicht des Gepäckablagesystems gemäß einer weiteren Ausführungsform der vorliegenden Erfindung;
- Fig. 3: eine schematische Querschnittsdarstellung einer Passagierkabine eines Luftfahrzeuges mit einem Gepäckablagesystem gemäß einer weiteren Ausführungsform der vorliegenden Erfindung; und
- Fig. 4: ein Flussdiagramm zum Erläutern eines Verfahrens zum Betreiben eines Gepäckablagesystems in einem Luftfahrzeug gemäß einer weiteren Ausführungsform der vorliegenden Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

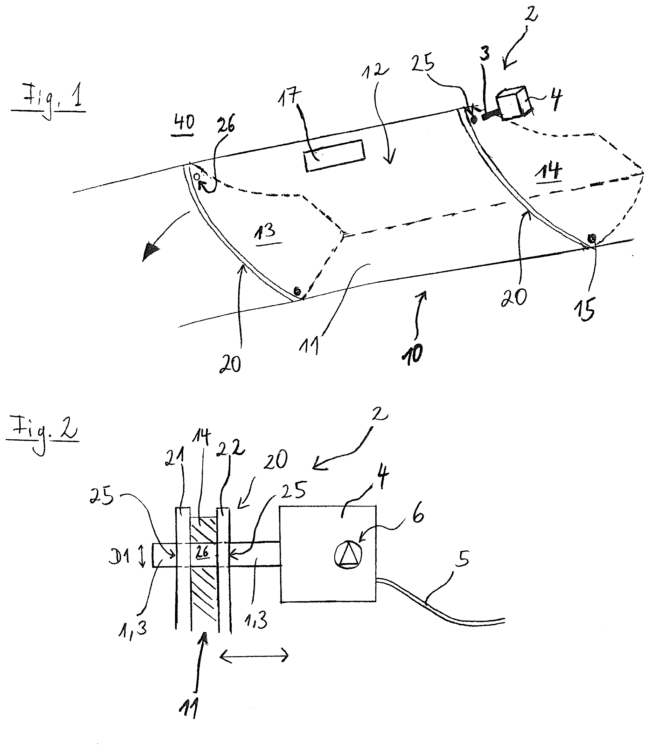

Fig. 1 zeigt beispielhaft eine perspektivische Ansicht eines Gepäckablagesystems gemäß einer Ausführungsform.

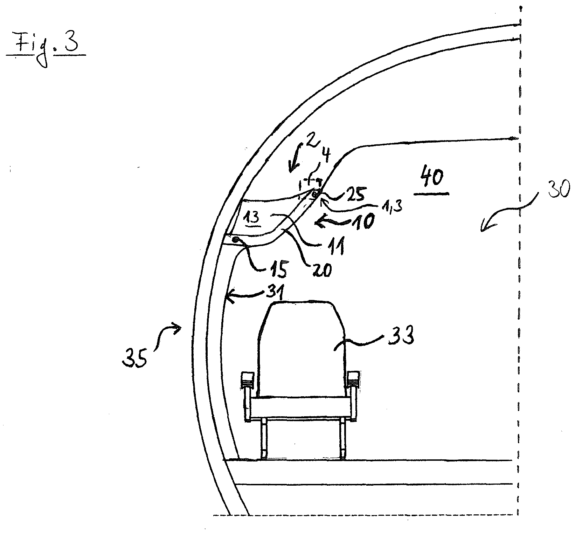

In Fig. 1 bezeichnet Bezugszeichen 2 ein Gepäckablagesystem für ein Luftfahrzeug 40 (siehe Fig. 3). Das Gepäckablagesystem 2 umfasst ein Rastmittel 3, welches mittels eines elektromechanischen Auslösers 4 zwischen einer Entriegelungsstellung und Verriegelungsstellung ansteuerbar ist. Das Gepäckablagesystem 2 umfasst ferner eine Gepäckablage 10 mit einem Gehäuse 11 mit einer Beladungsöffnung 12 und einem Halterahmen 20, wobei das Gehäuse 11 zumindest teilweise in einem Halterahmen 20 der Gepäckablage 10 verschwenkbar gelagert ist und wobei das Gehäuse 11 und der Halterahmen 20 jeweils ein Gegenrastmittel 25, 26 aufweisen, welche bei entsprechender Ansteuerung des Rastmittels 3 für eine Schwenkverriegelung des Gehäuses 11 mit dem Rastmittel 3 in Wirkverbindung und für eine Schwenkentriegelung des Gehäuses 11 mit dem Rastmittel 3 außer Wirkverbindung bringbar sind.

Das Rastmittel 3 und die Gegenrastmittel 25, 26 können in einer geschlossenen Transportposition des Gehäuses 11 zumindest bereichsweise in Höhe eines Griffes 17 des Gehäuses 11 angeordnet sein. Der in der Fig. 1 gezeigte Halterahmen 20 umfasst insbesondere einen inneren Führungsrahmen 21 und einen äußeren Führungsrahmen 22, wobei Stirnflächen 13, 14 des Gehäuses 11 jeweils zwischen dem inneren Führungsrahmen 21 und dem äußeren Führungsrahmen 22 angeordnet sein können (siehe Fig. 2).

Im Falle einer Ausnahmesituation oder Gefahrensituation schaltet der elektromechanische Auslöser 4 beispielsweise automatisch das Rastmittel 3 zwischen der Entriegelungsstellung und der Verriegelungsstellung. Das Rastmittel 3 und der elektromechanische Auslöser 4 können insbesondere hinter einer Kabinenverkleidung 31 einer Passagierkabine 30 von außen nicht sichtbar und somit nicht frei zugänglich montiert oder angeordnet sein. Somit kann der elektromechanische Auslöser 4 beispielsweise eine manuelle Entriegelungsvorrichtung 6 umfassen, die beispielsweise von außen nicht frei zugängliche ist (siehe Fig. 3). Das Gehäuse 11 mit der Beladungsöffnung 12 kann ferner eine Drehachse 15 aufweisen und das Gehäuse 11 kann mittels der Drehachse 15 zwischen einer Beladeposition und der geschlossenen Transportposition schwenkbar sein. Die Drehachse 15 kann als Längsträger ausgebildet sein und der Längsträger kann ein Rohr aus Metall, Kunststoff oder Verbundwerkstoff umfassen (hier nicht gezeigt).

Es ergibt sich aus dem Kontext der Erfindung, dass das hier beschriebenen Rastmittel 3 mit dem elektromechanischen Auslöser 4 alternativ auch jeweils an zwei gegenüberliegenden Stirnflächen 13, 14 des Gehäuses 11 angeordnet sein kann.

Fig. 2 zeigt eine schematische Detailansicht des Gepäckablagesystems gemäß einer weiteren Ausführungsform.

Fig. 2 zeigt insbesondere eine Ausführungsform des Halterahmens 20, wobei der Halterahmen 20 den inneren Führungsrahmen 21 und den äußeren Führungsrahmen 22 umfasst. Die Stirnfläche 14 (bzw. Stirnfläche 13) des Gehäuses 11 kann zwischen dem inneren Führungsrahmen 21 und dem äußeren Führungsrahmen 22 bewegbar oder schwenkbar angeordnet sein. Das Rastmittel 3 kann als Bolzen 1 ausgebildet sein und die Gegenrastmittel 25 in dem Gehäuse 11 und dem Halterahmen 20 - hier umfassend den inneren Führungsrahmen 21 und den äußeren Führungsrahmen 22 - können jeweils als Loch ausgebildet sein, wobei die Löcher eine Toleranz von jeweils 1-2 Millimeter hinsichtlich eines Durchmessers D1 des Bolzens 1 aufweisen können. Der elektromechanische Auslöser 4 kann ferner eine Signalleitung 5 umfassen, wodurch der elektromechanische Auslöser 4 insbesondere durch einen Bordcomputer gesteuert werden kann. Eine Bewegung des Rastmittels 3 wird durch einen Doppelpfeil der Fig. 2 verdeutlicht.

Fig. 3 zeigt eine schematische Querschnittsdarstellung einer Passagierkabine eines Luftfahrzeuges mit einem Gepäckablagesystem gemäß einer weiteren Ausführungsform.

In Fig. 3 bezeichnet Bezugszeichen 30 die Passagierkabine des Luftfahrzeuges 40. Die Fig. 3 zeigt ferner den schematischen Querschnitt durch einen Luftfahrzeugrumpf 35. Das hier beschriebene Gepäckablagesystem 2 kann wie in Fig. 3 gezeigt oberhalb einer Sitzreihe 33 - exemplarisch durch einen Sitz dargestellt - angeordnet sein.

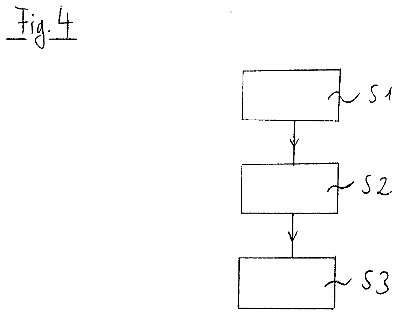

Fig. 4 zeigt ein Flussdiagramm zum Erläutern eines Verfahrens zum Betreiben eines Gepäckablagesystems für eine Gepäckablage gemäß einer weiteren Ausführungsform.

In einem ersten Schritt S1 des Verfahrens wird ein durch einen elektromechanischen Auslöser 4 zwischen einer Entriegelungsstellung und Verriegelungsstellung steuerbares Rastmittel 3 bereitgestellt. In einem nächsten Schritt S2 des Verfahrens wird eine Gepäckablage 10 mit einem Gehäuse 11 und einem Halterahmen 20 bereitgestellt, wobei das Gehäuse 11 zumindest teilweise in dem Halterahmen 20 der Gepäckablage 20 verschwenkbar gelagert wird, wobei das Gehäuse 11 und der Halterahmen 20 jeweils ein Gegenrastmittel 25, 26 aufweisen. In einem weiteren Schritt S3 des Verfahrens werden die Gegenrastmittel 25, 26 durch entsprechende Ansteuerung des Rastmittels 3 für eine Schwenkverriegelung des Gehäuses 11 mit dem Rastmittel 3 in Wirkverbindung und für eine Schwenkentriegelung des Gehäuses 11 mit dem Rastmittel 3 außer Wirkverbindung gebracht.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen und Modifikationen der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Ein-satzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Bolzen
- 2: Gepäckablagesystem
- 3: Rastmittel
- 4: elektromechanischer Auslöser
- 5: Signalleitung
- 6: eine manuelle Entriegelungsvorrichtung
- 10: Gepäckablage
- 11: Gehäuse
- 12: Beladungsöffnung
- 13, 14: Stirnflächen des Gehäuses
- 15: Drehachse des Gehäuses
- 17: Griff der Gepäckablage
- 20: Halterahmen
- 21: innerer Führungsrahmen
- 22: äußerer Führungsrahmen
- 25, 26: Gegenrastmittel
- 30: Passagierkabine
- 31: Kabinenverkleidung
- 33: Sitzreihe
- 35: Luftfahrzeugrumpf
- 40: Luftfahrzeug
- D1: Durchmesser
- S1-S3: Schritte des Verfahrens

## Patentansprüche

1. Gepäckablagesystem (2) für ein Luftfahrzeug (40), umfassend:
ein Rastmittel (3), welches als Bolzen (1) ausgebildet ist und mittels eines elektromechanischen Auslösers (4) zwischen einer Entriegelungsstellung und einer Verriegelungsstellung ansteuerbar ist; und
eine Gepäckablage (10) mit einem Gehäuse (11) und einem Halterahmen (20), wobei das Gehäuse (11) zumindest teilweise in dem Halterahmen (20) der Gepäckablage (10) verschwenkbar gelagert ist;
wobei der Halterahmen (20) einen inneren Führungsrahmen (21) und einen äußeren Führungsrahmen (22) umfasst und Stirnflächen (13, 14) des Gehäuses (11) jeweils zwischen dem inneren Führungsrahmen (21) und dem äußeren Führungsrahmen (22) angeordnet sind;
wobei das Gehäuse (11) und der Halterahmen (20) jeweils ein Gegenrastmittel (25, 26) aufweisen, welche in dem Gehäuse (11) und dem Halterahmen (20) jeweils als Loch ausgebildet sind, wobei der innere Führungsrahmen (21) und der äußere Führungsrahmen (22) das Gegenrastmittel (26) aufweisen; und
wobei die Gegenrastmittel (25, 26) bei entsprechender Ansteuerung des Rastmittels (3) für eine Schwenkverriegelung des Gehäuses (11) mit dem Rastmittel (3) in Wirkverbindung und für eine Schwenkentriegelung des Gehäuses (11) mit dem Rastmittel (3) außer Wirkverbindung bringbar sind.

2. Gepäckablagesystem (2) nach Anspruch 1, wobei der elektromechanische Auslöser (4) in einer Ausnahmesituation automatisch das Rastmittel (3) zwischen der Entriegelungsstellung und der Verriegelungsstellung schaltet.

3. Gepäckablagesystem (2) nach Anspruch 1 oder 2, wobei die Löcher eine Toleranz von jeweils 1 bis 2 Millimeter hinsichtlich eines Durchmessers (D1) des Bolzens (1) aufweisen.

4. Gepäckablagesystem (2) nach einem der vorherigen Ansprüche, wobei der elektromechanische Auslöser (4) eine Signalleitung (5) umfasst.

5. Gepäckablagesystem (2) nach einem der vorherigen Ansprüche, wobei der elektromechanische Auslöser (4) eine zusätzliche manuelle Entriegelungsvorrichtung (6) umfasst.

6. Gepäckablagesystem (2) nach einem der vorherigen Ansprüche, wobei das Gehäuse (11) eine Drehachse (15) aufweist und das Gehäuse (11) mittels der Drehachse (15) zwischen einer Beladeposition und der geschlossenen Transportposition des Gehäuses (11) verschwenkbar ausgebildet ist.

7. Gepäckablagesystem (2) nach einem der vorherigen Ansprüche, wobei die Drehachse (15) als Längsträger ausgebildet ist und der Längsträger ein Rohr aus Metall, Kunststoff oder Verbundwerkstoff umfasst.

8. Luftfahrzeug mit einem Gepäckablagesystem (2) nach einem der Ansprüche 1 bis 7.

9. Verfahren zum Betreiben eines Gepäckablagesystems (2) in einem Luftfahrzeug (40), mit folgenden Verfahrensschritten:
Bereitstellen (S1) eines durch einen elektromechanischen Auslöser (4) zwischen einer Entriegelungsstellung und einer Verriegelungsstellung ansteuerbaren Rastmittels (3), welches als Bolzen (1) ausgebildet ist;
Bereitstellen (S2) einer Gepäckablage (10) mit einem Gehäuse (11) und einem Halterahmen (20), wobei das Gehäuse (11) zumindest teilweise in dem Halterahmen (20) der Gepäckablage (10) verschwenkbar gelagert wird, wobei der Halterahmen (20) einen inneren Führungsrahmen (21) und einen äußeren Führungsrahmen (22) umfasst und Stirnflächen (13, 14) des Gehäuses (11) jeweils zwischen dem inneren Führungsrahmen (21) und dem äußeren Führungsrahmen (22) angeordnet sind, wobei das Gehäuse (11) und der Halterahmen (20) jeweils ein Gegenrastmittel (25, 26) aufweisen, welche in dem Gehäuse (11) und dem Halterahmen (20) jeweils als Loch ausgebildet sind, wobei der innere Führungsrahmen (21) und der äußere Führungsrahmen (22) das Gegenrastmittel (26) aufweisen; und
in Wirkverbindung Bringen (S3) der Gegenrastmittel (25, 26) mit dem Rastmittel (3) für eine Schwenkverriegelung des Gehäuses (11) und außer Wirkverbindung Bringen der Gegenrastmittel (25, 26) mit dem Rastmittel (3) für eine Schwenkentriegelung des Gehäuses (11) durch entsprechende Ansteuerung des Rastmittels (3).

10. Verfahren nach Anspruch 9, wobei durch den elektromechanischen Auslöser (4) das Rastmittel (3) in einer Ausnahmesituation automatisch zwischen der Entriegelungsstellung und der Verriegelungsstellung geschalten wird.

## Claims

1. A luggage storage system (2) for an aircraft (40), comprising:
a latching means (3) which is in the form of a bolt (1) and can be actuated between an unlocked position and a locked position by means of an electromechanical trigger (4); and
a luggage rack (10) with a housing (11) and a holding frame (20), wherein the housing (11) is at least partially pivotably mounted in the holding frame (20) of the luggage rack (10);
wherein the holding frame (20) comprises an inner guide frame (21) and an outer guide frame (22), and end faces (13, 14) of the housing (11) are respectively arranged between the inner guide frame (21) and the outer guide frame (22);
wherein said housing (11) and said support frame (20) each have a counter-engagement means (25, 26) formed as a hole in said housing (11) and said support frame (20), respectively, said inner guide frame (21) and said outer guide frame (22) having said counter-engagement means (26); and
wherein the counter latching means (25, 26) can be brought into operative connection with the latching means (3) for a pivotal locking of the housing (11) and out of operative connection with the latching means (3) for a pivotal unlocking of the housing (11) when the latching means (3) is actuated accordingly.

2. Luggage storage system (2) according to claim 1,
wherein the electromechanical trigger (4) automatically switches the latching means (3) between the unlocked position and the locked position in an exceptional situation.

3. Luggage storage system (2) according to claim 1 or 2,
wherein the holes each have a tolerance of 1 to 2 millimeters with respect to a diameter (D1) of the bolt (1).

4. Luggage storage system (2) according to any one of the preceding claims,
wherein the electromechanical trigger (4) comprises a signal line (5).

5. Luggage storage system (2) according to any one of the preceding claims,
wherein the electromechanical release (4) comprises an additional manual unlocking device (6).

6. Luggage storage system (2) according to one of the previous claims,
wherein the housing (11) has an axis of rotation (15) and the housing (11) is designed to be pivotable by means of the axis of rotation (15) between a loading position and the closed transport position of the housing (11).

7. Luggage storage system (2) according to one of the previous claims,
wherein the axis of rotation (15) is designed as a longitudinal beam and the longitudinal beam comprises a tube made of metal, plastic or composite material.

8. An aircraft with a luggage storage system (2) according to any of claims 1 to 7.

9. A method for operating a baggage storage system (2) in an aircraft (40), having the following method steps:
provision (S1) of a latching means (3) which can be actuated by an electromechanical trigger (4) between an unlocking position and a locking position and which is designed as a bolt (1);
provision (S2) of a luggage rack (10) with a housing (11) and a holding frame (20), wherein the housing (11) is at least partially pivotably mounted in the holding frame (20) of the luggage rack (10), wherein the holding frame (20) comprises an inner guide frame (21) and an outer guide frame (22) and end faces (13, 14) of the housing (11) are respectively arranged between the inner guide frame (21) and the outer guide frame (22), the housing (11) and the retaining frame (20) each having a counter-engagement means (25, 26) which are formed in the housing (11) and the retaining frame (20) respectively as a hole, the inner guide frame (21) and the outer guide frame (22) having the counter-engagement means (26); and
bringing (S3) the mating latching means (25, 26) into operative connection with the latching means (3) for pivotal latching of the housing (11) and bringing the mating latching means (25, 26) out of operative connection with the latching means (3) for pivotal unlatching of the housing (11) by corresponding control of the latching means (3).

10. Method according to claim 9, wherein the latching means (3) is automatically switched between the unlocked position and the locked position by the electromechanical trigger (4) in an exceptional situation.

## Revendications

1. Système de rangement des bagages (2) pour un aéronef (40), comprenant :
un moyen d'encliquetage (3) qui est conçu comme un boulon (1) et qui peut être commandé au moyen d'un déclencheur électromécanique (4) entre une position de déverrouillage et une position de verrouillage ; et
un porte-bagages (10) avec un boîtier (11) et un cadre de maintien (20), le boîtier (11) étant logé de manière pivotante au moins partiellement dans le cadre de maintien (20) du porte-bagages (10) ;
le cadre de maintien (20) comprenant un cadre de guidage intérieur (21) et un cadre de guidage extérieur (22) et des surfaces frontales (13, 14) du boîtier (11) étant respectivement disposées entre le cadre de guidage intérieur (21) et le cadre de guidage extérieur (22) ;
dans lequel le boîtier (11) et le cadre de support (20) comportent chacun un moyen de contre-encliquetage (25, 26) qui est formé comme un trou dans le boîtier (11) et le cadre de support (20) respectivement, le cadre de guidage intérieur (21) et le cadre de guidage extérieur (22) comportant le moyen de contre-encliquetage (26) ; et
les moyens d'encliquetage conjugués (25, 26) pouvant être amenés en liaison active avec le moyen d'encliquetage (3) pour un verrouillage pivotant du boîtier (11) et hors liaison active avec le moyen d'encliquetage (3) pour un déverrouillage pivotant du boîtier (11), lors d'une commande correspondante du moyen d'encliquetage (3).

2. Système de rangement de bagages (2) selon la revendication 1,
dans lequel le déclencheur électromécanique (4) commute automatiquement le moyen d'encliquetage (3) entre la position de déverrouillage et la position de verrouillage dans une situation d'exception.

3. Système de rangement de bagages (2) selon la revendication 1 ou 2,
dans lequel les trous présentent chacun une tolérance de 1 à 2 millimètres par rapport à un diamètre (D1) du goujon (1).

4. Système de rangement de bagages (2) selon l'une quelconque des revendications précédentes,
dans lequel le déclencheur électromécanique (4) comprend une ligne de signalisation (5).

5. Système de rangement de bagages (2) selon l'une des revendications précédentes, dans lequel le déclencheur électromécanique (4) comprend un dispositif de déverrouillage manuel supplémentaire (6).

6. Système de rangement de bagages (2) selon l'une des revendications précédentes, dans lequel le boîtier (11) présente un axe de rotation (15) et le boîtier (11) est conçu pour pouvoir pivoter au moyen de l'axe de rotation (15) entre une position de chargement et la position de transport fermée du boîtier (11).

7. Système de rangement de bagages (2) selon l'une des revendications précédentes, dans lequel l'axe de rotation (15) est conçu comme un longeron et le longeron comprend un tube en métal, en plastique ou en matériau composite.

8. Aéronef comprenant un système de rangement de bagages (2) selon l'une quelconque des revendications 1 à 7.

9. Procédé pour faire fonctionner un système de rangement de bagages (2) dans un aéronef (40), comprenant les étapes de procédé suivantes :
mise à disposition (S1) d'un moyen d'encliquetage (3) pouvant être commandé par un déclencheur électromécanique (4) entre une position de déverrouillage et une position de verrouillage, lequel est conçu comme un boulon (1) ;
préparation (S2) d'un porte-bagages (10) avec un boîtier (11) et un cadre de maintien (20), le boîtier (11) étant logé de manière pivotante au moins partiellement dans le cadre de maintien (20) du porte-bagages (10), le cadre de maintien (20) comprenant un cadre de guidage intérieur (21) et un cadre de guidage extérieur (22) et des surfaces frontales (13, 14) du boîtier (11) sont respectivement disposées entre le cadre de guidage intérieur (21) et le cadre de guidage extérieur (22), le boîtier (11) et le cadre de maintien (20) présentant respectivement un moyen de crantage antagoniste (25, 26), lesquels sont respectivement réalisés sous forme de trou dans le boîtier (11) et le cadre de maintien (20), le cadre de guidage intérieur (21) et le cadre de guidage extérieur (22) présentant le moyen de crantage antagoniste (26) ; et
amener en liaison active (S3) les moyens d'encliquetage conjugués (25, 26) avec le moyen d'encliquetage (3) pour un verrouillage pivotant du boîtier (11) et amener hors liaison active les moyens d'encliquetage conjugués (25, 26) avec le moyen d'encliquetage (3) pour un déverrouillage pivotant du boîtier (11) par une commande correspondante du moyen d'encliquetage (3).

10. Procédé selon la revendication 9, dans lequel le moyen d'encliquetage (3) est automatiquement commuté entre la position de déverrouillage et la position de verrouillage par le déclencheur électromécanique (4) dans une situation d'exception.
